# EUROPEAN PATENT APPLICATION

(11) **EP 4 156 146 A1**
(43) Date of publication of application: **29.03.2023**
(21) Application number: 22193348.4
(22) Date of filing: 31.08.2022
(51) Int. Cl.: G08G 5/00, G08G 5/02, B64C 39/02, H04B 17/391, B64D 45/04, G01S 13/78, G01S 1/56, G06V 20/17

(54) **A RADIO SYSTEM FOR REALISING A PRECISE LANDING APPROACH BASED IN MICROWAVES AND A METHOD FOR REALISING A PRECISE LANDING APPROACH**

(30) Priority: 24.09.2021 PL 43902821
(71) Applicant: SIEC BADAWCZA LUKASIEWICZ-INSTYTUT LOTNICTWA, 02-256 Warszawa (PL)
(72) Inventor: DZIUGIEL, Bartosz, 04-967 Warszawa (PL)
(74) Representative: AOMB Polska Sp. z.o.o.

(57) **Abstract**

The object of the invention is a microwave-based radio system for realising a precise landing approach (MLS), characterised in that an azimuth antenna transmitter and/or an elevation signal transmitter and/or a DME transmitter, and preferably all three said transmitters, are placed aboard an unmanned aerial vehicle, and in particular on a drone. The object of the invention is also a method for realising a precise landing approach using such a system.

## Description

### Field of the invention

The object of the invention is a solution related to the application of unmanned aerial vehicles as a carrier for an MLS-type precise landing approach system as well as a method for realising a precise landing approach using such a system and a method for calibrating such a system.

### Prior Art

From prior art, there are three main known systems realising a precise landing approach.
- ILS - a radio navigation system, utilising a directional radio beacon determining the axis of the landing path, an approach path radio beacon spatially determining the angle of approach to landing, three marker radio beacons, used to determine the distance and the altitude of the aerial vehicle relative to the runway, and a distance measuring system (DMS), optionally or as a supplement of the marker radio beacons. The ILS system is a relatively old technology, and it has a number of drawbacks, such as: a narrow scope of operation, the ability to establish only a single approach path, hight costs of the devices or a risk of interference.
- MLS - the successor of the ILS system; relative to the ILS, it is less susceptible to interference, and it provides much broader possibilities in terms of approach angles and trajectory.
- 'Satellite based augmentation systems' (SBAS) - the system consists of a satellite network and ground stations; its main advantages over the previous solutions are its much lower cost and broader range. The main drawbacks include low precision in polar regions, and in regions with a small number of ground stations, as well as susceptibility to interference related to solar activity.

The first two described systems are based on ground transmitters installed at airports. There are mobile solutions, such as the MMLS, produced by the Textron company, and the D-ILS, produced by the Thales company; however, these systems are intended mainly for the military, being based to a further extent on ground transmitters, and requiring calibration and proper distribution.

From prior art, there are also known solutions such as those described in the patent publications CN110937138B and US20180308298A1, describing systems for calibrating ILS or MLS systems by means of drones. These drones receive a signal from MLS or ILS ground transmitters, verifying the precision of the acquired data, which allows for further calibration of the ground transmitters.

### Summary

The purpose of the present invention is the application of an unmanned aerial vehicle or a swarm of unmanned aerial vehicles, in particular drones, as a carrier in an MLS-type precise landing approach system. The primary predicted application of the system is in ensuring a safe landing approach in a random area in an emergency situation. The system is autonomous and independent from the GPS signal.

A radio system for realising a precise landing approach based on microwaves (MLS), comprising:
- an azimuth antenna transmitter configured to indicate the approach azimuth of the guided object,
- an elevation antenna transmitter configured to indicate the altitude at which the guided object is situated,
- a DME transmitter configured to measure the physical distance between the guided object and the transmitter,
- preferably, additionally an automatic calibrating system configured to ensure proper operation of the system under various land relief conditions; and
- preferably, additionally an optical navigation system configured to utilise a database comprising the coordinates of reference objects,
according to the invention is characterised in that the azimuth antenna transmitter and/or the elevation antenna transmitter and/or the DME transmitter, and preferably all three said transmitters, are placed aboard an unmanned aerial vehicle, and in particular on a drone.

Preferably, each of said transmitters is placed on a separate unmanned aerial vehicle, and in particular on a drone.

Preferably, said unmanned aerial vehicles are connected to the ground by means of a cable, by means of which they are also powered.

Preferably, the unmanned aerial vehicles which the system consists of are provided with cameras, microphones, laser light emitters, Doppler lasers, and anticollision systems.

Preferably, the system comprises calibration drones, configured to verify the correct operation of the system.

Preferably, the unmanned aerial vehicles are configured to be controlled by an operator, or to operate autonomously.

The invention also comprises a method for realising a precise landing approach, characterised by comprising the steps of:
- establishing the area of operation of the system realising a precise landing approach by the person activating the system by inputting of input data, or automatically, based on an analysis of topographic data and data related to the state of the atmosphere, guaranteeing safety of the landing approach,
- defining the required flight trajectory of the guided object, typical for a classic landing approach at a certified airport, or adjusted to conditions such as ambient conditions and/or the technical condition of the aerial vehicle, optimised in terms of safety of the operation,
- acquiring spatial data and those influencing the precision and reliability of the system, in particular data related to land relief and topography, where the updating of the data influencing the operation of the system is realised by means of a swarm of drones acquiring data allowing for the generation of up-to-date radio wave propagation models, and/or by means of 3-D models of the surroundings, and/or by means of the data based on an analysis of an image of the surroundings from the unmanned aerial vehicle, in particular related to land topography or relief,
- identifying the optimal spatial position of the system components based on the criterion of minimising the interference, including transmitter carriers; defining the optimal specification of the system, including the direction of transmitters, signal cut-off parameters, and the angular range of the emitted signal,
- allocating the system components and beginning the operation, said system components comprising:
   - an azimuth antenna transmitter configured to indicate the approach azimuth of the guided object,
   - an elevation antenna transmitter configured to indicate the altitude at which the guided object is situated,
   - a DME transmitter configured to measure the physical distance between the guided object and the transmitter,
   - preferably, additionally an automatic calibrating system configured to ensure proper operation of the system under various land relief conditions; and
   - preferably, additionally an optical navigation system configured to utilise a database comprising the coordinates of reference objects,
   where the azimuth antenna transmitter and/or the elevation antenna transmitter and/or the DME transmitter, and preferably all three said transmitters, are placed aboard an unmanned aerial vehicle, and in particular on a drone.

Preferably, the method according to the invention additionally comprises the step of verifying the operating parameters of the system and calibration based on the data acquired in a repetitive manner from a swarm of unmanned aerial vehicles.

Preferably, the method according to the invention additionally comprises the steps of emitting light and direction signals supporting the guidance process of the aerial vehicle.

In the present specification, the term: 'configured to' is to be understood as 'adjusted to' in a technical sense, and thus built properly for an indicated task, and/or equipped properly for this task, and/or programmed properly for this task.

### Description of the drawings

The invention will now be presented in more detail in a preferable embodiment, with reference to the attached drawings, in which:
- Fig. 1: presents the elements of the unmanned aerial vehicle and an azimuth antenna transmitter in a landing position and an operating position mounted thereon along with a DME antenna transmitter, while
- Fig. 2: presents the elements of the unmanned aerial vehicle and an elevation antenna transmitter in a landing position and an operating position mounted thereon.

### Detailed description

In a preferable embodiment, the precise landing system is based on the utilisation of unmanned aerial vehicles, and in particular a swarm of drones, for autonomous or semiautonomous management of the travelling process of an aerial vehicle using a technology compatible with the MLS system. The solution is particularly applicable in the case of a need to ensure a precise approach, or to guide the aerial vehicle in a location in which traditional precise approach systems are unavailable or not applicable. Then, based on a series of input data, the activated system develops, executes and dynamically updates an optimal allocation plan for the system components and their specifications.

The proposed invention eliminates the limitations of the solutions described in prior art. The system is mobile; it can be located in any place (in the case of a large number of objects on the ground interfering with the signal, the source of the signal is moved up to a proper altitude). Moreover, the navigation systems of carrier drones based on optical technologies allow for gaining independence from satellite navigation systems. Almost all medium and large planes handling the passenger traffic have receivers of the MLS system.

The system can be found useful in the case of an emergency landing in a random area, and it could serve as a mobile precise approach system capable of reaching operational capacity within a very short time and at any land elevation. Moreover, apart from the ability to emit a radio system compatible with receivers of the MLS systems, the system would be capable of autocalibration, guaranteeing the proper quality of guidance in an area susceptible to the occurrence of interference.

Main components of the system:
- An azimuth antenna transmitter 3 indicating the approach azimuth, integrated on the unmanned aerial vehicle,
- An elevation signal transmitter 6 indicating the altitude, at which the guided object is situated, integrated on the unmanned aerial vehicle,
- A DME transmitter 4 (Distance Measuring Equipment) allowing for determination of the distance from the transmitter.
- An automatic calibrating system ensuring proper operation of the system under various conditions of land relief/topography.
- An optical navigation system 2 utilising a database comprising the coordinates of reference objects (markers).
- A foldable landing gear assembly 5

The process of defining the plan of allocating the components, specifying their operation, and executing the defined tasks in the MLS operation mode, consists of:
- Establishing the area of operation by the person activating the system by inputting of input data, or automatically, based on an analysis of topographic data and those related to the state of the atmosphere, guaranteeing safety of the landing approach
- Defining the required flight trajectory of the guided object, typical for a classic landing approach at a certified airport, or adjusted to conditions such as ambient conditions and/or the technical condition of the aerial vehicle, optimised in terms of operating safety
- Acquiring data influencing the quality of the executed tasks, including spatial data - related to land relief/topography, in particular data directly influencing the precision and reliability of the system.

The scenario of a task is defined and executed based on specified input data. It consists of the following steps:
- identifying the optimal spatial position of the system components based on the criterion of minimising the interference, including transmitter carriers; defining the optimal specification of the system, including the direction of transmitters, signal cut-off parameters, and the angular range of the emitted signal
- Allocating the system components and initiating operation
- Verifying the operating parameters of the system and calibration

In the case of operating the system in moderately dynamically changing surroundings, the process of acquiring input data can be a repetitive process. Updating the data which influence the operating quality of the system can be realised by means of a swarm of drones acquiring data allowing for the creation of up-to-date radio wave propagation models, improving the effectiveness of the system calibration process considerably. Two basic sources of data used to define the dynamic specification of the system can be distinguished:
- 3-D models of the surroundings, assumed as included in the system data repository-the initial data
- Data acquired in a repetitive mode, by means of said elements of the system (drones) (31).
- Data related to the current position of the system components both relative to the ground and relative to each other - the data based on an analysis of an image from the surroundings of the drone (a system component), in particular related to land relief or topography.

Apart from emitting a radio signal according to the specification of the MLS system, the described system may emit light and direction signals supporting the process of guiding the aerial vehicle.

The system consists of:
- a drone storage installed on a vehicle of adequate services;
- a drone or drones being the carriers of the individual system components. The number of drones as well as their specification are the result of the specificity of the system, in particular in terms of the characteristics of its functionality, such as the operating range, the executed functions, e.g. handling a go-around in the case of an unsuccessful approach, as well as technological capabilities determining the size and the power of the transmitting antennas. Carrier drones can be tethered UAVs powered from the ground via a cable.
- A swarm of drones updating the spatial data in the operating area of the system, influencing the precision of the system.
- A calibrating drone or drones. The calibrating drone is intended to verify the correct operation of the system. In a moderately dynamically changing area, calibration should be repeated every specified time interval.
- The system also consists of an information-processing computer with a user interface allowing for inputting the operating parameters and monitoring the correct operation of the system. The user interface 5 can also be realised by means of an external device provided with a monitor, connected to a ground station by means of a radio connection, e.g. Wi-Fi.

The data-processing computer has continuous access to information provided by the components of the system as well as a repository of data about the area where it has been distributed.

Drones included in the system can be additionally provided with suitable detectors and actuators. They can be (multispectral) cameras, microphones, laser light emitters, Doppler radars, anticollision systems and other devices allowing for interaction with the managed objects and for efficient acquisition of data related to the dynamics of changes in the situation, status, condition and the technical status of the system components.

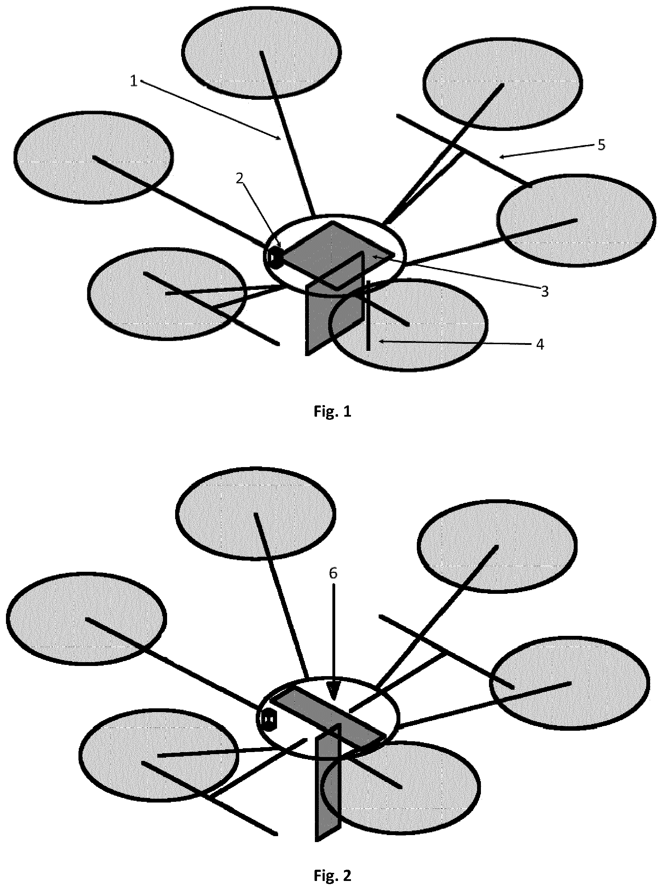

Like the elevation antenna transmitter 6, the azimuth antenna transmitter 3 is foldable; fig. 1 presents the azimuth antenna transmitter 3: in the operating position and in the folded position.

Apart from that, the system has access to information generated by the object being guided, e.g. ADSB, allowing for the effectiveness of the performed actions and the safety of operation. The described system is provided for cooperating with both manned and unmanned systems. It is capable of verifying the correctness of operation. Functionalities identified as crucial for safety are multiplied.

The use of the invention will considerably increase the level of safety in air transport, by:
- Providing a low-cost (compared to the traditional precise approach system) method for realising a precise and automatic landing approach, independent from the GNSS signal. For use primarily at airports with occasional traffic.
- Providing an emergency system for a precise landing approach, capable of being distributed under any land and weather conditions, considerably reducing the risks resulting, e.g. from landing in a random area or at underequipped diversion airports with the lack of visibility.
- Pinpointing an optimal emergency landing site in terms of safety. Minimising the severity of the incident from the point of view of people both aboard and on the ground.

Moreover, the system enables:
- Very prompt initiation of efficient and safe operation under the conditions of both urban development as well as open spaces.
- Continuous monitoring of the surroundings ensures prompt response of the system to the changing conditions.
- Minimising the effects of a possible aviation accident by guidance towards areas reducing the risk.
- Cooperation with services in the case of complex incidents, including integration with an implemented crisis management system. For example, closing certain streets for traffic in order to enable an emergency landing.

Under the conditions of the absence of an emergency situation, the system allows for more efficient management of air traffic by:
- The ability to combine systems and guide more than one aerial vehicle at the same time. Concurrently ensuring separation and the ability to react automatically in a situation of a risk resulting from its violation.
- Integrations with an air traffic management system and other management systems.

The drawings use the following references:
1- Drone frame
2- Optical navigation system of the drone
3- Azimuth antenna transmitter
4- DME transmitter
5- Foldable landing gear assembly
6- Elevation antenna transmitter

## Claims

1. A radio system system for realising a precise landing approach based on microwave (MLS), comprising:
- an azimuth antenna transmitter (3) configured to indicate the approach azimuth of the guided object,
- an elevation antenna transmitter (6) configured to indicate the altitude at which the guided object is situated,
- a DME transmitter (4) configured to measure the physical distance between the guided object and the transmitter,
- preferably additionally an automatic calibrating system configured to ensure proper operation of the system under various land relief conditions and
- preferably additionally an optical navigation system (2) configured to utilise a database comprising the coordinates of reference objects,
**characterised in that** the azimuth antenna transmitter (3) and/or the elevation antenna transmitter (6) and/or the DME transmitter (4) are placed aboard an unmanned aerial vehicle, and in particular on a drone.

2. The system according to claim 1, **characterised in that** each of said transmitters is placed on a separate unmanned aerial vehicle, and in particular on a separate drone.

3. The system according to claim 1 or 2, **characterised in that** said unmanned aerial vehicles are connected to the ground by means of a cable, by means of which they are also powered.

4. The system according to claim 1, 2 or 3, **characterised in that** the unmanned aerial vehicles which the system consists of are provided with cameras, microphones, laser light emitters, Doppler lasers and anticollision systems.

5. The system according to any of the claims from 1 to 4, **characterised in that** the system comprises calibration drones configured to verify the correct operation of the system.

6. The system according to any of the claims from 1 to 5, **characterised in that** the unmanned aerial vehicles are configured to be controlled by an operator or operate autonomously.

7. The system according to claim 1, **characterised in that** the azimuth antenna transmitter (3) and the elevation antenna transmitter (6) and the DME transmitter (4) are placed aboard an unmanned aerial vehicle, and in particular on a drone.

8. The system according to claim 1, **characterised in that** it additionally comprises an automatic calibrating system, configured to ensure proper operation of the system under various land relief conditions.

9. The system according to claim 1, **characterised in that** it additionally comprises an optical navigation system (2) configured to utilise a database comprising the coordinates of reference objects.

10. A method for realising a precise landing approach **characterised in that** it comprises the following steps:
- establishing the area of operation of the system realising a precise landing approach by the person activating the system by inputting of input data or automatically based on an analysis of topographic data and data related to the state of the atmosphere, guaranteeing safety of the landing approach,
- defining the required flight trajectory of the guided object, typical for a classic landing approach at a certified airport, or adjusted to conditions such as ambient conditions and/or the technical condition of the aerial vehicle, optimised in terms of safety of the operation,
- acquiring spatial data and those influencing the precision and reliability of the system, in particular data related to land relief and topography, where the updating of the data influencing the operation of the system is realised by means of a swarm of drones acquiring data allowing for the generation of up-to-date radio wave propagation models, and/or by means of 3-D models of the surroundings, and/or by means of the data based on an analysis of an image of the surroundings from the unmanned aerial vehicle, in particular related to land topography or relief,
- identifying the optimal spatial position of the system components based on the criterion of minimising the interference, including transmitter carriers; defining the optimal specification of the system, including the direction of transmitters, signal cut-off parameters, and the angular range of the emitted signal,
- allocating the system components and beginning the operation, said system components comprising:
- an azimuth antenna transmitter (3) configured to indicate the approach azimuth of the guided object,
- an elevation antenna transmitter (6) configured to indicate the altitude at which the guided object is situated,
- a DME transmitter (4) configured to measure the physical distance between the guided object and the transmitter,
where the azimuth antenna transmitter (3) and/or the elevation antenna transmitter (6) and/or the DME transmitter (4) are placed aboard an unmanned aerial vehicle, and in particular on a drone.

11. The method according to claim 10, **characterised in that** the allocated system components additionally comprise an automatic calibrating system, configured to ensure proper operation of the system under various land relief conditions.

12. The method according to claim 10, **characterised in that** the allocated system components additionally comprise an optical navigation system (2) configured to utilise a database comprising the coordinates of reference objects.

13. The method according to claim 10, **characterised in that** the azimuth antenna transmitter (3) and the elevation antenna transmitter (6) and the DME transmitter (4) are placed aboard an unmanned aerial vehicle, and in particular on a drone.

14. The method according to claim 10, **characterised in that** it additionally comprises the steps of emitting light and direction signals supporting the guidance process of the aerial vehicle.

15. The method according to claim 10, **characterised in that** it additionally comprises the step of verifying the operating parameters of the system and calibration based on the data acquired in a repetitive manner from a swarm of unmanned aerial vehicles.
